# EUROPEAN PATENT APPLICATION

(11) **EP 1 260 289 A1**
(43) Date of publication of application: **27.11.2002**
(21) Application number: 01600011.9
(22) Date of filing: 21.05.2001
(51) Int. Cl.: B22D 1/00, C21C 5/48, C22B 9/05

(54) **Porous plug for treatment of molten metals**

(71) Applicant: University of Patras, 26500 Patras (GR); Georgsmarienhütte GmbH, 49124 Georgsmarienhütte (DE); Dahl, Winfried, Aachen (DE); Mavrommatis, Konstantinos, 52072 Aachen (DE)
(72) Inventor: Hüllen, P. Van, 49479 Ibbenburen-Laggenbeck (DE); Patel, Pervez, Dr., 49124 Georgsmarienhütte (DE); Papamantellos, Dimitrios, Patras (GR); Angelopoulos, Georgios, Patras (GR); Gotsis, Vassilios, Patras (GR)
(74) Representative: Angelopoulou, Emilia

(57) **Abstract**

**Summary of the invention**

The principal object of the present invention is to provide a refractory porous body to be used in metal treatment processes, said body to be used as porous plug. The body is made mainly of magnesia with magnesia-alumina spinel additions and is able to produce fine bubbles with a diameter in the range of 2 mm or less, within molten metals, been also environmental friendly with minor chromium oxide content, less than 1%. The main application of this invention is in the secondary metallurgy and especially in the ladle treatment of steels and can be also used in a wide range of other molten metal refining processes like for example in aluminium refining. The main goal of the created fine bubbles is to float out inclusions and micro-inclusions (less than 50 µm) and moreover contributes to the temperature and composition homogenization of the metal melts.

## Description

### Background of the invention

Porous plugs are used with advantage in secondary metallurgy for the production of high purity steels. Typically the porous plug is a porous refractory body which may be assembled on a steel or iron jacket connected to gas inlet pipe. The porous plug is fitted in an opening in the bottom of the vessel or in a lance and through this gas such as, nitrogen and argon, is blown into the molten metal bath.

With the gas injection due to porous plugs into the melt the metal refining is obtained by the following actions:
a) increases the surface area between gas and liquid and consequently enhances the rate of desorption of dissolved gases such as nitrogen and hydrogen {1}.
b) increases turbulence in the liquid through gas bubbles and, therefore, the desorption of gases during vacuum degassing {2}.
c) removes solid and liquid inclusions by floating them out into the slag phase.

Steps a) and c) are particularly favoured by small bubble size {1 -3}.

This is apparent concerning a) since reduced bubble increases the specific gas/liquid interface which defined as interfacial area per volume of the bubbles in the bath. Besides this the relatively low ascending velocity of the fine bubbles increases the contact time between the injected gas and the molten metal and so enhances the efficiency of the process since, for the same amount of the dissolved gas removal, less inert gas is consumed.

As far as c) is concerned, L. Wang *et al* {4}, who has developed a mathematical model to predict the efficiency of removal of alumina inclusions from steel, the optimum results are achieved using bubble diameters between 0.5 to 2mm.

Although it seems that the bubble size in the steel refining processes is of critical importance is not known up to date any specified technique, which is industrially employed for the production of special porous plugs adequate for fine bubbling.

The typical size of bubbles generated up to date by the current used porous plugs is between 10 to 30mm {4}. These are considered as relatively big bubbles and provide low efficiencies of collision with the impurities and also relatively low specific interfacial area.

The major criteria, which are used for the design of porous plugs concern the selection of materials and construction methods, are:
a) Satisfactory gas permeability.
b) Controlled metal infiltration especially during suddenly pressure drops. and
c) Suitable material strength to withstand the adverse operating conditions in the metallurgical reactors.

The most usual approach to achieve higher gas permeability is by altering the refractory ceramic structure.

This is achieved:
- through diminishing the press pressure, which takes place in the first stage of the ceramic production.
- by choosing the larger grains as raw material
- with addition of burnout compounds that lead to higher porosity after firing.

For the open porosity of 15-22 %, which is typical for ceramic refractories the gas permeability (DIN 51058) comes to 2-15nPm for magnesia and magnesia chrome products and less than 5nPm for high alumina products {5}.

Although the flow of a maximum of gas should be guaranteed, the size of pores is limited, since steel or slag infiltration into the ceramic structure in case of a pressure loss is undesirable. Infiltration depends on the ferrostatic pressure, the viscosity of molten steel (temperature), the contact angle between the refractory and molten steel and on the pore size {1}.

Usually the refractory material used is alumina or magnesia based similarly to those used in the refractory lining of the vessel (ladle, tundish etc.) {6}. These materials fulfil the requirements of high resistance in erosion by the molten steel and the slags used during the metallurgical processes and that of high thermal strength.

Alumina based porous plugs and other refractory parts have been widely used in ladles and tundishes for the purpose of improving the cleanliness of steel. However, after operation, metal penetration, slag attack, clogging and cracks were observed. The addition of MgO to porous plugs seemed to improve their properties. The thermal shock resistance was improved by the increase of strength and fracture energy. The corrosion resistance also increased and the metal penetration layer was decreased {7}. Additionally Al₂O₃-based porous plugs containing TiO₂, Al₂O₃ and MgO in the matrix seemed to have better properties {8}. Other researchers {9} have recommended that the porous plugs should be prepared by a mixture of SiO₂ and MgO in Al₂O₃. The plugs on Al₂O₃-basis with SiO₂, Fe₂O₃ and TiO₂ additions have proved to be very effective for bubbling argon into steel. Also, some control of gas permeability was achieved when sintered Al₂O₂-ZrO₂ pellets were mixed with phenol resin, compacted and calcined {9}.

Regarding the MgO based porous plugs Cr₂O₃ is considered a necessary strength additive {9} although it is undesirable for environmental reasons.

In recent years, magnesia-alumina spinel refractories have been employed in the linings of very high temperature vacuum-induction furnaces melting special alloys. Magnesia chromite refractory arecommonly used in secondary steelmaking plants because of their high resistance to a wide. variety of slags and their stability under vacuum at high temperature. However, recent environmental legislation means that chromium-containing refractories are to be avoided. Magnesia-alumina spinel (MgO-MgAl₂O₄) refractories mainly used for cement rotary kilns, are possible alternative chromium-free refractories for secondary steelmaking {10}.

### LITERATURE

{1} F Oeters: "Metallurgy of Steelmaking", Verlag Stahleisen mbH, Düsseldorf und Springer-Verlag Berlin, Heidelberg, 1989.
{2} R.I.L Guthrie: "Engineering in Process Metallurgy", Clerendon Press,
   Oxford, 1989.
{3} A.Scheludko, B.V.Toshev and D.T. Bojadjiev: "Attachment of Particles. to a Liquid Surface (Capillary Theory of Flotation)"J.C.S. Faraday I, 72 (1976), pp.2815/2828.
{4} Wang L.,Lee H.-G., Hayes P.: "Prediction of the optimum bubble size for inclusion removal from molten steel by flotation", ISIJ International, Vol. 36 (1996), No1, pp. 7-16.
{5} Grabner B., Höffgen: "Application and Wear of Porous Plugs in
   Secondary Metallurgy", Radex-Rdsch, (1985), H.3, pp.581-610.
{6} N. Bannenberg: "Interactions of Refractory Material and Steel and their Influence on Steel Cleanliness", XXXVIIth International Colloquium on Refractories, October 1994, Aachen, pp.17-34.
{7} Tsuchinary A., Hokii T., Itoh T., Kanaoka C.: "Influence of MgO addition on the properties of porous Al₂O₃ refractory containing TiO₂ and Al₂O₃ in the matrix", steel res. 63 (1992), No 4, pp.166/171.
{8} Tsuchinary A., Hokii T., Eba A.,Imai H., Kanaoka C.: "Application results of Al₂O₃ porous plug containing TiO₂, Al₂O₃ and MgO as matrixes on an actual operation", steel res. 64 (1993), No 3, pp.153/156.
{9} P.E. Anagbo, J.K. Brimacombe: "The design and performance of porous plugs im metal refining-part I", Iron & Steelmaker, (10) 1988, pp. 38/43.
{10} Ch.L. Macey: "Evaluation of magnesite-Spinel refractories for mineral processing kilns", Industrial Heating, April 1992, pp. 28/29.

### Detailed description of the invention

Typical raw materials with a typical chemical analysis as follows **(table 1)** were used for the production of the refractory mass (porous plug)

**Table 1:**

| **Typical chemical analysis of the raw materials.** | | | | | | | |
|---|---|---|---|---|---|---|---|
| | MgO % | SiO₂ % | CaO % | Fe₂O₃ % | Al₂O₃ % | Cr₂O₃ % | B₂O₃ % |
| Magnesia | 97 min 96.5 | 0.45 max 0.6 | 2.0 max 2.2 | 0.45 max 0.6 | 0.05 | - | < 0.01 |
| Spinel MgAl₂O₄ | 55.31 | 0.96 | 2.47 | 1.77 | 37.56 | 1.93 | - |

In **table 2** a typical grain size distribution and a typical weight per cent ratio of the raw materials used are presented respectively.

**Table 2:**

| **Typical grain size distribution and wt.% ratio of the raw materials.** | | |
|---|---|---|
| Grain size distribution (mm) | Magnesia | Spinel |
| | wt. (%) | |
| 2-4 | 12-14 | 8-15 |
| 0.5-2 | 12-14 | 0-8 |
| 0-05 | 33-35 | 8-13 |
| 0-0.1 | 15-17 | |
| **Total** | **72 - 80** | **16 - 36** |

The addition of the magnesia-alumina spinel contributes to the improvement of the thermal shock resistance of the porous plugs. For example, an addition of 25% spinel, improves the maximum linear dilatation from 2% to 1.6% (at 1420°C).

The mixture of the raw materials is formed at the desired shape at a pressure range between 900 and 1100 kgf/cm². The firing takes place at final temperatures between 1500 to 1750°C with a specific time-temperature program which may include a first step for the moister removal lasting from a couple of hours to several hours. A second step includes a progressive increase of temperature to the final one. This procedure lasts several hours or days. It is also possible to use one step process or a multi-step process according to the particular specifications of the porous plugs. It is also possible, that additions 3-4% by volume of calcium sulphate and 0.3-0.5% by volume of hexametaphosphate may be maide in the. mixture of the raw materials as they contribute to the stability of the green part and enhance the bonding mechanisms.

The main goal of this invention is that these porous plugs create fine bubbles within molten metal baths. Moreover, they present excellent behaviour, like high mechanical strength, chemical neutrality, limited metal infiltration etc, at the aggressive environment of the metallurgical reactors like ladles.

### Performance

### Example 1

Based on the procedure above, a porous plug named 4022 with the grain size percentage and distribution, which in **Table 3** is presented, has been produced and tested.

**Table 3:**

| **Grain size distribution and percentage of the raw materials for the porous plug 4022.** | | |
|---|---|---|
| Grain size distribution (mm) | Magnesia | Spinel |
| | (wt. %) | |
| 2-4 | 12.5 | 14.5 |
| 0.5-2 2 | 13.5 | 9.5 |
| 0-0.5 | 34 | - |
| 0-0.1 | 16 | - |

The raw materials were mixed in a laboratory scale mixer with the addition of 0.4 vol. % hexametaphosphate and 2.9 vol. % calcium sulphate, both in aqueus solution and the produced mixture was formed in a cylindrical shape with dimensions: ∅78x80 mm. The forming pressure was 1100 kgf/cm². The cylindrical plug was fired in a tunnel kiln at 1620°C. According to PRE standards the physicochemical properties of the plug were measured and are presented in **table 4** together with the chemical analysis.

**Table 4:**

| **Chemical analysis and physicochemical properties of 4022 porous plug.** | | | | | |
|---|---|---|---|---|---|
| **Chemical analysis, wt. (%)** | | | | | |
| **CaO** | **SiO**_{**2**} | **Al**_{**2**}**O**_{**3**} | **Fe**_{**2**}**O**_{**3**} | **Cr**_{**2**}**O**_{**3**} | **MgO** |
| 2.0 | 0.7 | 11.0 | 0.5 | 0.4 | 85.4 |

| **Physicochemical properties** | | | | | |
|---|---|---|---|---|---|
| **B.d.**^{**(1)**} **gr/cm**^{**3**} | | **Ap.p.**^{**(2)**} **%** | | **C.C.S.**^{**(3)**} **kgf/cm**^{**2**} | |
| 2.92 | | 16.5 | | 450 | |

| | | | | | |
|---|---|---|---|---|---|
| (1): Bulk density, | | | | | |
| (2): Apparent porosity, | | | | | |
| (3): Cold crushing strength | | | | | |

In order to simulate the ferrostatic pressure conditions in which the porous plug is subjected in the steel ladle, a vessel (able to do overpressure) filled with distilled water was used. The influence of the gas flow rate and the overpressure on the size of the bubbles was examined (water model simulation).

Porous plug 4022 creates in a gas (air) flow rate per active area range from 12 to 25 cm³/min·cm² bubbles with mean diameter between 0.6 to 1.0 mm and st. deviation ±0.26 mm. For an overpressure range from 0.5 to 3.5 bar and a constant volumetric gas (air) flow rate per active area of 47cm³/min·cm², 4022 creates bubbles with a mean diameter of 1.0 to 1.2 mm and st. deviation ± 0.3mm.

The 4022 porous plug was also tested in a linear expansion test with a temperature range of 25 to 1350°C. A thermal expansion coefficient of 12.7x10⁻⁶ °C⁻¹ was measured.

The wetting behaviour of 4022 porous plug was tested by the sessile drop technique. The steel droplet was St-37 and the experiment took place in an induction furnace with argon atmosphere. The contact angle that was measured was è = 134° after 6min at T=1500°C.

Hot trial without gas injection through the porous plug was performed in an induction vacuum furnace under ambient conditions. The lining of the furnace was made of a magnesia refractory mass. A cylindrical (∅49mmx25mm) porous plug 4022, which was sheathed in a stainless steel case of 1.5mm thickness, was embedded at the bottom of the furnace. For the bonding of the porous plug with the magnesia refractory mass a mixture of powder from wetted smashed porous plug plus 1 vol. % waterglass was used.

The dimensions of the furnace were OD=120mm, ID=65mm and height=150mm. The total amount of the steel charge was 4kg. The temperature during the trial was maintained between 1550 and 1650°C. After the trial the porous plug was tested. No evidence of reaction or disintegration of the plug from its contact with the liquid metal or the refractory mass, with naked eye, was found.

For a hot trial with gas injection through the porous plug, the same furnace, as above, 10kg charge capacity, was rebuilt. At the lower part of the furnace, a magnesia-alumina spinel brick with a cylindrical hole (∅55mmx70mm) in its the centre was placed in order to be used as the found of the furnace lining and for the arrangement of the porous plug for the gas injection. In the hole, a stainless steel (X2CrNi 18 9)) case (∅53mm) with a gas-inlet pipe welded at its bottom was placed. Within the case, the porous plug (∅49mmx28mm) was adjusted. In order to maintain gas tightness between the plug, the stainless steel case and the furnace's lining a mixture of a wetted smashed porous plug powder plus 1 vol. % waterglass was employed.

Two heats were performed using nitrogen and argon as injection gas, respectively. The maximum temperature, which was achieved, was over about 1750°C. The maximum amount of charge was 4 kg. A quantity of 400gr cover slag with composition 51 % CaO, 1% SiO₂, 48% Al₂O₃ was used.

The height of the liquid steel over the porous plug was 150mm approximately two materials. Fine bubbling during the second heat was achieved. The diameter of the bubbles was estimated in the range of 3-5 mm.

The steel was often Al-killed and deslagging was done in order to observe the bubbles. Two times during the heat the energy supply was turned off for a few minutes in order to stop the stirring of the metal from the induction currents for better observation of the bubbles, for two metal sampling and for a higher thermal fatigue of the porous plug.

After the testing of the used porous plug with x-ray analysis and microscopic observation the following results have come out:

The hot trials have shown that a fine bubbling can be achieved and the thermal strength of the porous plug is excellent. No reaction with the liquid metal, no erosion, no surface cracks, no changes in mineralogical phases and negligible metal penetration have been observed.

### Example 2

A porous plug named 115A with the grain size percentage and distribution, which in **Table 5** is presented, has been produced and tested.

**Table 5:**

| **Grain size distribution and percentage of the raw materials for the porous plug 115A.** | | |
|---|---|---|
| Grain size distribution (mm) | Magnesia | Spinel |
| | (wt.%) | |
| 2-4 | 13 | 12 |
| 0.5-2 | 13 | - |
| 0-0.5 | 34 | 12 |
| 0-0.1 | 16 | - |

The raw materials were mixed in a laboratory scale mixer with the addition of 0.4 vol. % hexametaphosphate and 2.9 vol. % calcium sulphate, both in aqua solution and the produced mixture was formed in a cylindrical shape with dimensions: ∅78x80 mm. The forming pressure was 1100 kgf/cm². The cylindrical plug was fired in a tunnel kiln at 1620°C. According to PRE standards the physicochemical properties of the plug were measured and are presented in **table 6** together with the chemical analysis.

**Table 6:**

| **Chemical analysis and physicochemical properties of the 115A porous plug.** | | | | | |
|---|---|---|---|---|---|
| **Chemical analysis, wt. (%)** | | | | | |
| **CaO** | **SiO**_{**2**} | **Al**_{**2**}**O**_{**3**} | **Fe**_{**2**}**O**_{**3**} | **Cr**_{**2**}**O**_{**3**} | **MgO** |
| 2.61 | 0.92 | 8.53 | 0.82 | 0.56 | 86.56 |

| **Physicochemical properties** | | | | | |
|---|---|---|---|---|---|
| **B.d.**^{**(1)**} **gr/cm**^{**3**} | | **Ap.p.**^{**(2)**} **%** | | **C.C.S.**^{**(3)**} **kgf/cm**^{**2**} | |
| 2.84 | | 18.6 | | 605 | |

| | | | | | |
|---|---|---|---|---|---|
| (1): Bulk density, | | | | | |
| (2): Apparent porosity, | | | | | |
| (3): Cold crushing strength | | | | | |

In water model porous plug 115A creates in a gas (air) flow rate per active area range from 12 to 25 cm³/min·cm² bubbles with mean diameter between 0.64 to 0.72 mm and st. deviation ±0.29 mm.

The 115A porous plug was also tested in a linear expansion test with a temperature range of 25 to 1350°C. A thermal expansion coefficient of 13.1x10⁻⁶ °C⁻¹ was measured.

The wetting behaviour of 115A porous plug was tested by the sessile drop technique. The droplet was iron (99.9985%) and the experiment took place in an induction furnace with Argon atmosphere. The contact angle that was measured was è = 129.4° after 20min at T=1600°C.

### Example 3

A commercial porous plug was tested in the same water model and the size of the bubbles, which were created, was measured. In **table 7** the chemical analysis and the physicochemical properties of this porous plug are presented.

**Table 7:**

| **Chemical analysis and physicochemical properties of the commercial porous plug.** | | | | | | | | | |
|---|---|---|---|---|---|---|---|---|---|
| **Chemical analysis, wt. (%)** | | | | | | | | | |
| **CaO** | **SiO**_{**2**} | **Al**_{**2**}**O**_{**3**} | | **Fe**_{**2**}**O**_{**3**} | **Cr**_{**2**}**O**_{**3**} | **MgO** | | **P**_{**2**}**O**_{**5**} | **Na**_{**2**}**O** |
| - | 20.45 | 75.95 | | 0.21 | 1.75 | 1.0 | | 1.0 | 0.1 |

| **Physicochemical properties** | | | | | | | | | |
|---|---|---|---|---|---|---|---|---|---|
| **B.d.**^{**(1)**} **gr/cm**^{**3**} | | | **Ap.p.**^{**(2)**} **%** | | | | **C.C.S.**^{**(3)**} **kgf/cm**^{**2**} | | |
| 2.48 | | | 21.4 | | | | 650 | | |

| | | | | | | | | | |
|---|---|---|---|---|---|---|---|---|---|
| (1): Bulk density, | | | | | | | | | |
| (2): Apparent porosity, | | | | | | | | | |
| (3): Cold Crushing Strength | | | | | | | | | |

Commercial porous plug creates in a gas (air) flow rate per active area range from 12 to 25 cm³/min·cm² bubbles with mean diameter between 1.8 to 2.0 mm and st deviation ±0.4 mm.

The wetting behaviour of the commercial porous plug was tested by the sessile drop technique. The droplet was iron (99.9985%) and the experiment took place in an induction furnace with Argon atmosphere. The contact angle that was measured was è = 115.9° after 20min at T=1600°C.

## Claims

1. A porous plug for treating molten metal comprising a body having an axis, said body being made of porous refractory materials, through which gas or gas mixtures are blown for introduction into the molten metal, said plug being able to produce fine bubbles within the molten metal for improving the metal cleanliness.

2. A porous plug in accordance with claim 1 made from magnesia and magnesia-alumina spinel, said magnesia proportion being in the range from 63 to 86 wt. %, said magnesia-alumina spinel proportion being in the range from 16 to 36 wt. %

3. A porous plug in accordance with claims 1 and 2 with magnesia having the following grain size distribution:
2-4 mm grain size: 10-15 wt.%
0.5-2 mm grain size: 10-15 wt.%
0-0.5 mm grain size: 30-37 wt.%
0-0.1 mm grain size: 13-19 wt.%
and with magnesia-alumina spinel having the following grain size distribution:
2-4 mm grain size: 8-15 wt.%
0.5-2 mm grain size: 0-8 wt.%
0-0.5 mm grain size: 8-13.wt.%

4. A porous plug in accordance with claims 1,2 and 3, said plug being pressed as green part before sintering at pressures from 900 to 1100 kgf/cm².

5. A porous plug in accordance with claims 1, 2,3 and 4 made by sintering at elevated temperatures over 1600°C.

6. A porous plug in accordance with claims 1,2 and 3, said porous plug having a predetermined pore size distribution, said pore size distribution being determined by the parameters 3, 4 and 5, said parameters being the grain size distribution of the primary raw materials, the pressure before sintering and the sintering temperature.

7. A porous plug in accordance with claim 6 said porous plug being able to produce within molten metals fine bubbles, said bubbles mean diameter being in the range from 0.5 to 4mm.

8. A porous plug in accordance with claim 7 to be used in the production of high purity metals.

9. A porous plug in accordance with claim 8 to be used for the production of clean steels.
